(19) **Europäisches Patentamt**

**European Patent Office**

**Office européen des brevets**

(11) **EP 1 319 807 B1**

(12) **EUROPEAN PATENT SPECIFICATION**

(45) Date of publication and mention
of the grant of the patent:
**22.09.2004 Bulletin 2004/39**

(51) Int Cl.[7]: **F01L 9/04**, H01F 7/18,
F02D 41/20

(21) Application number: **02027926.1**

(22) Date of filing: **13.12.2002**

(54) **Method for estimating the position and speed of an actuator body in an electromagnetic actuator for controlling the valve of an engine**

Verfahren zum Abschätzen der Position und Geschwindigkeit eines Ankers in einem elektromagnetischen Aktor zur Steuerung eines Motorventils

Méthode pour estimer la position et la vitesse d'une armature d'un actionneur électromagnétique pour la commande d'une soupape de moteur

(84) Designated Contracting States:
**DE ES FR GB SE**

(30) Priority: **14.12.2001 IT BO20010760**

(43) Date of publication of application:
**18.06.2003 Bulletin 2003/25**

(73) Proprietor: **MAGNETI MARELLI POWERTRAIN S.p.A.**
**20011 Corbetta (MI) (IT)**

(72) Inventors:
• **Panciroli, Marco**
**48100 Ravenna (IT)**
• **Morselli, Michele**
**40127 Bologna (IT)**
• **Marchi, Marco**
**40128 Bologna (IT)**

(74) Representative: **Jorio, Paolo et al**
**STUDIO TORTA S.r.l.,**
**Via Viotti, 9**
**10121 Torino (IT)**

(56) References cited:
WO-A-00/60220          DE-A- 19 544 207
DE-A- 19 832 196          US-B1- 6 234 122
US-B1- 6 249 418

**Description**

The present invention relates to a method for estimating the position and speed of an actuator body in an electromagnetic actuator for controlling a valve of an engine.

As is known, experiments are currently being conducted on internal combustion engines of the type described in Italian patent application ITBO990443A filed on 4 August 1999, in which the intake and exhaust valves are set in motion by electromagnetic actuators. Such electromagnetic actuators have undoubted advantages, in that they make it possible to control each valve according to a law optimised for each operating condition of the engine, whereas traditional mechanical actuators (typically camshafts) require the definition of a valve lift profile that represents an acceptable compromise for all possible operating conditions of the engine.

An electromagnetic actuator for a valve of an internal combustion engine of the type described above normally comprises at least one electromagnet capable of displacing an actuator body made of ferromagnetic material and mechanically connected to the stem of the respective valve. In order to apply a particular law of motion to the valve, a control unit drives the electromagnet with a time-variable current in order to displace the actuator body in a suitable manner.

From experimental testing it has been observed that, in order to achieve relatively high precision in controlling the valve it is necessary to have feedback control of the position of the actuator body; it is therefore necessary to have an accurate - and substantially real-time - reading of the position of said actuator body at any time. In order to achieve high performance levels from the feedback control it is furthermore preferable also to have an accurate - and substantially real-time - reading of the speed of the actuator body at any time.

In electromagnetic actuators of the type described above, the position of the actuator body is read by a laser sensor, which is, however, expensive, delicate and difficult to calibrate and is therefore unsuitable for use in mass production. Furthermore, the speed of the actuator body is estimated in a time-derivation operation on the position of said actuator body at any time. However, such an operation supplies a relatively inaccurate result in that it tends to amplify the noise present when measuring the position of the actuator body.

The documents DE 19544207A and US 6234122A show further methods of controlling the actuator.

The aim of the present invention is to provide a method for estimating the position and speed of an actuator body in an electromagnetic actuator for controlling a valve of an engine, which does not have the drawbacks described and, in particular, is easy and economical to operate.

According to the present invention a method is provided for estimating the position and speed of an actuator body in an electromagnetic actuator for controlling a valve of an engine as claimed in Claim 1.

The present invention will now be described with reference to the attached drawings, which illustrate a few non-exhaustive embodiments thereof, in which:

- Figure 1 is a diagrammatic view, in side elevation and in partial section, of a valve of an engine and of a corresponding electromagnetic actuator operating according to the method that is the subject-matter of the present invention;
- Figure 2 is a diagrammatic view of a control unit for the device in Figure 1;
- Figure 3 illustrates diagrammatically a part of the control unit of Figure 2; and
- Figure 4 illustrates a circuit diagram of a detail of Figure 3.

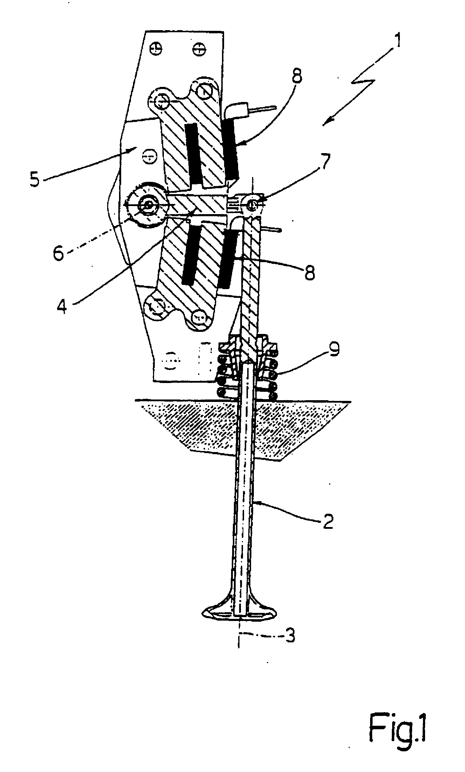

In Figure 1 an electromagnetic actuator 1 (of the type described in Italian patent application ITBO990443A filed on 4 August 1999) is indicated as a whole by the reference number 1, coupled to an intake or exhaust valve 2 of an internal combustion engine of a known type for displacing said valve 2 along a longitudinal axis 3 of the valve between a closed position (known and not illustrated) and a maximally open position (known and not illustrated).

The electromagnetic actuator 1 comprises a swinging arm 4 made at least partly of ferromagnetic material, which has a first end hinged to a support 5 so as to be able to oscillate about an axis 6 of rotation perpendicular to the longitudinal axis 3 of the valve 2, and a second end connected by a connector 7 to an upper end of the valve 2. The electromagnetic actuator 1 also comprises two electromagnets 8 carried in a fixed position by the support 5 so as to be arranged on opposite sides of the swinging arm 4, and a spring 9 coupled to the valve 2 and capable of holding the swinging arm 4 in an intermediate position (illustrated in Figure 1) in which said swinging arm 4 is equidistant from the pole pieces 10 of the two electromagnets 8.

In use, the electromagnets 8 are controlled by a control unit 11 so as to exert alternately or simultaneously a force of attraction of magnetic origin on the swinging arm 4 in order to make it rotate about the axis 6 of rotation, thereby displacing the valve 2 along the respective longitudinal axis 3 and between the aforementioned maximally open and closed positions (not illustrated). In particular, the valve 2 is in the aforementioned closed position (not illustrated) when the swinging arm 4 is abutting against the upper electromagnet 8, is in the aforementioned maximally open position (not illustrated) when the swinging arm 4 is abutting against the lower electromagnet 8, and is in a partly open position when the two electromagnets 8 both have power shut off and the swinging arm 4 is in the aforementioned intermediate position (illustrated in Figure 1) by the effect of the force exerted by the spring 9.

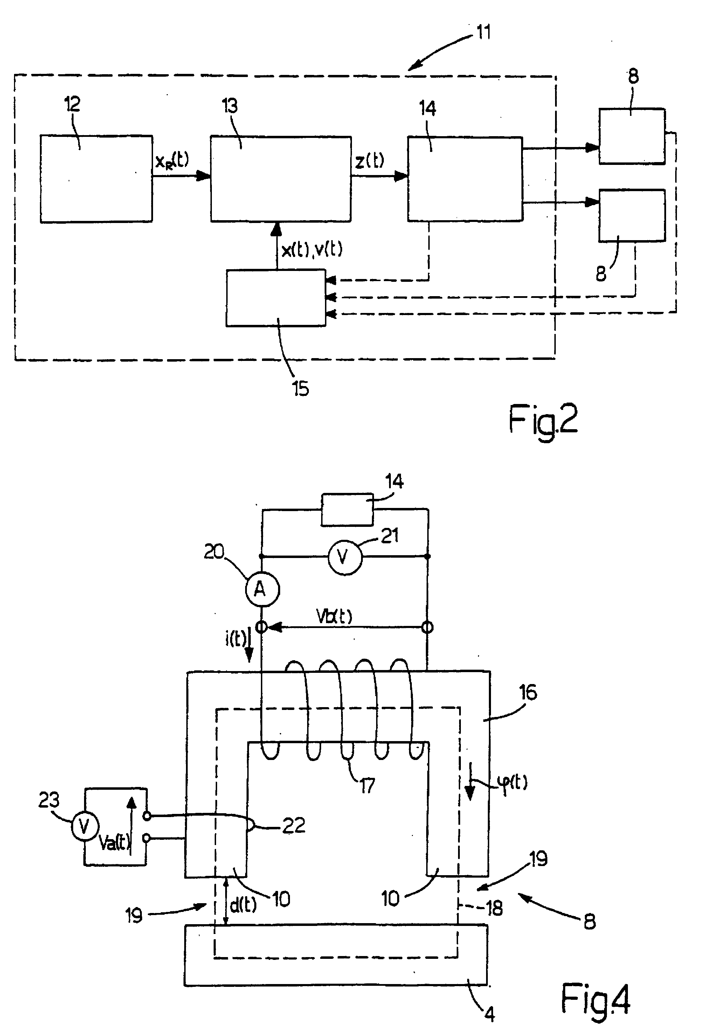

The control unit 11 provides feedback control, in a substantially known manner, for the position of the swinging arm 4, i.e. the position of the valve 2, on the basis of the conditioning of engine function. In particular, according to the illustration in figure 2, the control unit 11 comprises a reference generation block 12, a calculation block 13, a driving block 14 capable of supplying the electromagnets 8 with time-variable current, and an estimation block 15 capable of estimating - substantially in real time - the position x(t) and, where necessary, the speed v(t) of the swinging arm 4.

In use, the reference generation block 12 receives as inputs a plurality of parameters indicating the operating conditions of the engine (for example the load, the engine speed, the position of the throttle body, the angular position of the drive shaft, the temperature of the coolant) and supplies the calculation block 13 with a target value $x_R(t)$ (i.e. a desired value) for the position of the swinging arm 4 (and therefore the valve 2).

On the basis of the target value $X_R(t)$ for the position of the swinging arm 4 and on the basis of the estimated value x(t) of the position of the swinging arm 4 received from the estimation block 15, the calculation block 13 prepares and sends to the driving block 14 a control signal z(t) for driving the electromagnets 8. In a preferred embodiment, the calculation block 13 prepares the control signal z(t) also on the basis of an estimated value v(t) for the speed of the swinging arm 4 received from the estimation block 15.

According another embodiment, not illustrated, the reference generation block 12 supplies the calculation block 13 with either a target value $x_R(t)$ for the position of the swinging arm 4, or a target value $x_R(t)$ for the speed of the swinging arm 4.

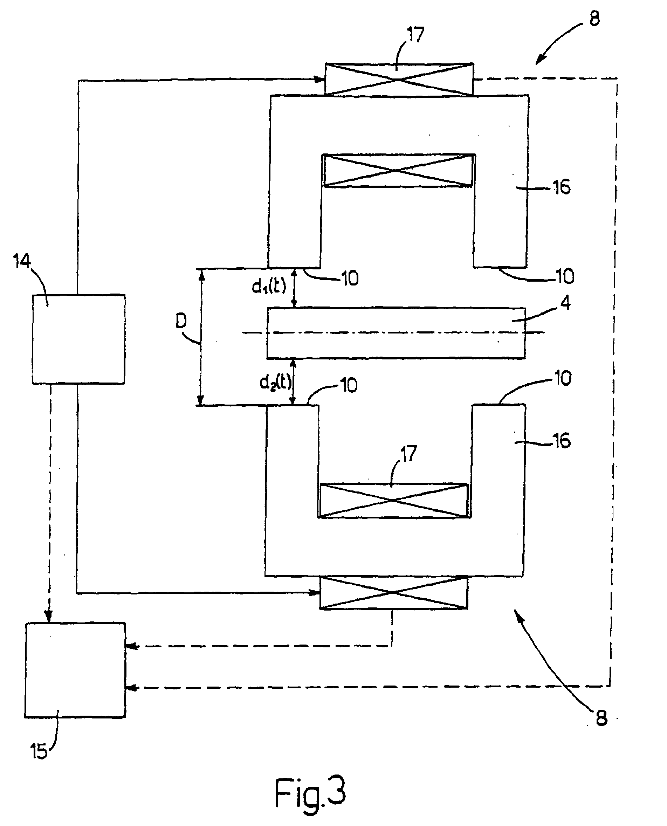

As illustrated in Figure 3, the driving block 14 supplies power to the two electromagnets 8, each of which is composed of a respective magnetic core 16 coupled to a corresponding coil 17, for displacing the swinging arm 4 on the basis of the commands received from the calculation block 13. The estimation block 15 reads the values, as shown in detail below, either from the driving block 14, or from the two electromagnets 8, in order to calculate an estimated value x(t) for the position and an estimated value v(t) for the speed of the swinging arm 4.

The swinging arm 4 is arranged between the pole pieces 10 of the two electromagnets 8, which are carried by the support 5 in a fixed position and at a fixed distance D from one another, and therefore the estimated value x(t) of the position of the swinging arm 4 can be obtained directly with a simple operation of algebraic addition from an estimated value d(t) of the distance between a given point on the swinging arm 4 and a corresponding point on the one of the two electromagnets 8. By analogy, the estimated value v(t) for the speed of the swinging arm 4 can be obtained directly from an estimated value for the speed existing between a given point on the swinging arm 4 and a corresponding point on one of the two electromagnets 8.

In order to calculate the value x(t) the estimation block 15 calculates the two estimated values $d_1(t)$, $d_2(t)$ for the distance between a given point on the swinging arm 4 and a corresponding point on one of the two electromagnets 8; from the two estimated values $d_1(t)$, $d_2(t)$, the estimation block 15 obtains two values $x_1(t)$, $x_2(t)$, which generally differ from one another because of measuring errors and noise. According to a preferred embodiment, the estimation block 15 takes an average of the two values $x_1(t)$, $x_2(t)$, weighted if necessary on the basis of the accuracy attributed to each value x(t). By analogy, in order to calculate the value v(t) the estimation block 15 calculates the two estimated values for speed existing between a given point on the swinging arm 4 and a corresponding point on one of the two electromagnets 8; from the two estimated values for speed, the estimation block 15 obtains two values $v_1(t)$, $v_2(t)$, which generally differ from one another because of measuring errors and noise. According to a preferred embodiment, the estimation block 15 takes an average of the two values $v_1(t)$, $v_2(t)$, weighted if necessary on the basis of the accuracy attributed to each value v(t).

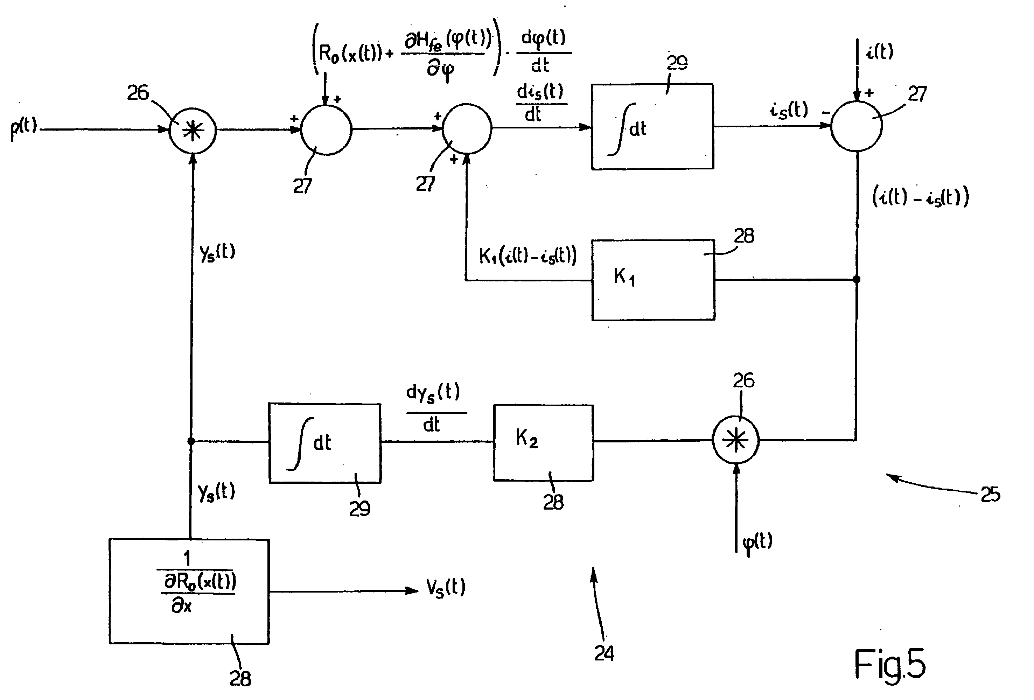

With particular reference to Figure 4, which illustrates a single electromagnet 8, a description is given below of the method used by the estimation block 15 for calculating an estimated value d(t) for the distance between a given point on the swinging arm 4 and a corresponding point on the electromagnet 8, and for calculating an estimated value for the speed existing between a given point on the swinging arm 4 and a corresponding point on the electromagnet 8.

In use, when the driving block 14 applies a voltage v(t) variable over time to the terminals of the coil 17 of the electromagnet 8, a current i(t) passes through said coil 17, consequently generating a flux φ(t) over a magnetic circuit 18 coupled to the coil 17. In particular, the magnetic circuit 18 coupled to the coil 17 is composed of the core 16 of ferromagnetic material of the electromagnet 8, the swinging arm 4 made of ferromagnetic material and the air gap 19 existing between the core 16 and the swinging arm 4.

The magnetic circuit 18 has a total reluctance R defined by the sum of the reluctance of iron $R_{fe}$ and the reluctance of the air gap $R_0$; the value for the flux φ(t) circulating over the magnetic circuit 18 is connected to the value of the current i(t) circulating within the coil 17 by the following relationship (in which N is the number of turns in the coil 17):

$$N * i(t) = R * \varphi(t)$$

$$R = R_{fe} + R_0$$

In general the value for total reluctance R depends both on the position x(t) of the swinging arm 4 (i.e. the breadth of the air gap 19, which is equal, except for a constant, to the position x(t) of the swinging arm 4), and on the assumed value for flux φ(t). Except for negligible errors (i.e. those of a first approximation) it can be determined that the value for reluctance of iron $R_{fe}$ depends solely on the assumed value for flux φ(t), while the value for reluctance of the air gap $R_0$ depends solely on the position x(t), i.e.

$$R\,(x(t),\,φ(t)) = R_{fe}\,(φ(t)) + R_0(x(t))$$

$$N * i(t) = R(x(t),\,φ(t)) * φ(t)$$

$$N * i(t) = R_{fe}\,(φ(t)) * φ(t) + R_0(x(t)) * φ(t)$$

By solving the last equation given above with regard to $R_0(x(t))$, it is possible to obtain the value of the reluctance of the air gap $R_0$ knowing the value of the current i(t), which value can easily be measured by an ammeter 20, knowing the value of N (fixed and dependent on the structural properties of the coil 17), knowing the value of the flux φ(t), and knowing the relationship between the reluctance of the iron ($R_{fe}$ and the flux φ (known from the structural properties of the magnetic circuit 18 and the magnetic properties of the material used, or easily determined by experimental tests).

The relationship between reluctance at the air gap $R_0$ and the position x can be obtained relatively simply by analysing the properties of the magnetic circuit 18 (an example of a model of the behaviour of the air gap 19 is represented by the equation given below). Once the relationship between reluctance at the air gap $R_0$ and the position x is known, the position x can be obtained from the reluctance at the air gap $R_0$ by applying the inverse relationship (applicable either by using the exact equation or by applying approximate numerical calculation methods). The above statements can be summarised in the following relationships (where $H_{fe}(φ(t)) = R_{fe}(φ(t)) * φ(t)$):

$$R_0(x(t)) = \frac{N \cdot i(t) - H_{fe}(φ(t))}{φ(t)}$$

$$R_0(x(t)) = K_1[1 - e^{-k_2 \cdot x(t)} + k_3 \cdot x(t)] + K_0$$

$$x(t) = R_0^{-1}\left(R_o(x(t))\right) = R_0^{-1}\left(\frac{N \cdot i(t) - H_{fe}(φ(t))}{φ(t)}\right)$$

The constants $K_0$, $K_1$, $K_2$, $K_3$ are constants that can be obtained in experimental tests by using a series of measurements on the magnetic circuit 18.

From the above, it is clear that if the flux φ(t) can be measured it is possible to calculate relatively easily the position x(t) of the swinging arm 4.

In a first embodiment, the flux φ(t) can be calculated by measuring the current i(t) that circulates through the coil 17 by using the ammeter 20 of a known type, measuring the voltage v(t) applied to the terminals of the coil 17 by using a voltmeter 21 of known type, and knowing the value for resistance RES of the coil 17 (a value that is easy to measure). This method of measuring the flux φ(t) is based on the following relationships:

$$\frac{dφ(t)}{dt} = v(t) - RES \cdot i(t)$$

$$\varphi(T) = \int_{0}^{T} (v(t) - RES \cdot i(t))dt + \varphi(0)$$

The conventional moment 0 is chosen so as to find out accurately the value of the flux $\varphi(0)$ at said moment 0; in particular, the moment 0 is normally chosen within a period of time in which no current is flowing through the coil 17 and, therefore, the flux $\varphi$ is substantially zero (the effect of any residual magnetisation is negligible), or the moment 0 is chosen according to a given position of the swinging arm 4 (typically when the swinging arm 4 is abutting against the pole pieces 10 of the electromagnet 8), in correspondence with which the value of the position x is known and therefore the value of the flux $\varphi$ is known.

The method stated above for calculating the flux $\varphi(t)$ is fairly accurate and fast (i.e. involving no delay); however, said method has a few problems, owing to the fact that the voltage v(t) applied to the terminals of the coil 17 is normally generated by a switching amplifier incorporated into the driving block 14 and therefore varies continuously between three values ($+V_{supply}$, 0, $-V_{supply}$). the continuous variation (with very abrupt rises and falls) of the voltage v(t) makes it very difficult to measure said voltage v(t) accurately and quickly and, consequently, to estimate the flux $\varphi$(t). In order to increase accuracy, the reading signal of the voltmeter 21 can be filtered in order to attenuate the high frequencies, but such filtering inevitably introduces a delay into the measuring process.

In another embodiment, the magnetic coil 16 is coupled to an auxiliary turn (or coil) 22, to the terminals of which another voltmeter 23 is connected; since the terminals of the turn 22 are substantially open (the internal resistance of the voltmeter 23 is so high as to be regarded as infinite without thereby introducing appreciable errors), no current flows through the turn 22 and the voltage $v_{aux}$(t) at its terminals depends solely on the time derivative of the flux $\varphi$(t), from which the flux can be deduced by means of a operation of integration (as concerns the value $\varphi(0)$, see the considerations stated above):

$$\frac{d\varphi(t)}{dt} = v_{aus}(t)$$

$$\varphi(T) = \int_{0}^{T} v_{aus}(t)dt + \varphi(0)$$

From experimental tests it has been demonstrated that, in contrast to the voltage v(t) at the terminals of the coil 17, the voltage $v_{aux}$(t) is substantially direct because of the effect of magnetic inertia (particular the stray currents induced in the iron) of the magnetic circuit 18 that damp the effects of the abrupt variations in the voltage v(t). In other words, the iron part of the magnetic circuit 18 has a low-pass filter effect that damps the abrupt variations in the voltage v(t) and makes the voltage $v_{aux}$(t) substantially direct without introducing delays in measurement.

As stated above it is clear that by using the reading of the voltage $v_{aux}$(t) of the auxiliary turn 22, calculation of the value of the flux $\varphi$(t) is more accurate and/or faster than using the reading of the voltage v(t) at the heads of the coil 17.

As well as for estimating the position x(t) of the swinging arm 4, measurement of the flux $\varphi$(t) can be used by the control unit 11 for verifying the value of the force f(t) of attraction exerted by the electromagnet 8 on the swinging arm 4, where:

$$f(t) = -\frac{1}{2} \cdot \frac{\partial R(x(t), \varphi(t))}{\partial x} \cdot \varphi^2(t)$$

$$f(t) = -\frac{1}{2} \cdot \frac{\partial R_0(x(t))}{\partial x} \cdot \varphi^2(t)$$

On the basis of the value of the position x(t) of the swinging arm 4, it is possible to calculate the value of the speed v(t) of the swinging arm 4 by using a simple time-derivative operation on the position x(t); however, the value for speed v(t) obtained with such a derivation operation has much interference, since, as is known, the derivation operation markedly amplifies high-frequency interference. To reduce the incidence of such interference it is necessary to carry out the filtering operations with low-pass type filters which, however, introduce inevitable delays in estimating the value of the speed v(t).

According to another embodiment, both the position x(t) and the speed v(t) can be calculated by using a process of calculation of the iterative type; this process is based on the equation (described above):

$$i(t) = R_0(x(t)) * \varphi + H_{fe}(\varphi(t))$$

deriving said equation with respect to time and applying the laws of partial derivation gives the equation:

$$\frac{di(t)}{dt} = \frac{\partial R_0(x(t))}{\partial x} \cdot \frac{dx(t)}{dt} \cdot \varphi(t) + R_0(x(t)) \cdot \frac{d\varphi(t)}{dt} + \frac{\partial H_{fe}(\varphi(t))}{\partial \varphi} \cdot \frac{d\varphi(t)}{dt}$$

$$\frac{dx(t)}{dt} = \frac{\frac{di(t)}{dt} - R_0(x(t)) \cdot \frac{d\varphi(t)}{dt} - \frac{\partial H_{fe}(\varphi(t))}{\partial \varphi} \cdot \frac{d\varphi(t)}{dt}}{\frac{\partial R_0(x(t))}{\partial x} \cdot \varphi(t)}$$

reading from left to right it can be seen that:

the time derivative of the current i(t) can be calculated easily by deriving the measurement signal of the ammeter 20 (this signal is generally very clean (i.e. free from noise) arid free from abrupt variations and, therefore, can be time-derived with no particular problems);
the partial derivative of the reluctance $R_0$ of the air gap 19 with respect to the position x can be calculated as a simple derivation of the equation $R_0=R_0(x)$ described above;
the time derivative of the position x(t) is the speed v(t);
the flux $\varphi(t)$ can be calculated by using one of the two methods described above;
the reluctance $R_0$ of the air gap 19 can easily be calculated from the equation $R_0=R_0(x)$ described above if the value of the position x is known;
the partial derivative of the quantity of ampere-turns Hfe of the iron with respect to the flux $\varphi$ can be obtained easily if the structural properties of the magnetic circuit 18 are known; and
the time derivative of the flux $\varphi(t)$ can be calculated with one of the two methods described above.

Assuming that we are starting from a conventional moment t=0 in which both the value of the flux $\varphi$ and the value of the position x are known (as described above, this moment 0 is normally chosen at the moment in which the swinging arm 4 is in a given position, typically abutting against the pole pieces 10 of the electromagnet 8).

Starting from the moment t=0, the value of the reluctance $R_0$ of the air gap 19 is calculated at the moment t=0 using the value of the position x(0) at the moment 0; inserting this value into the last equation described above (and previously also calculating the other values in this equation by the method indicated earlier), it is possible to calculate very easily the value of the speed v(0) at the moment t=0.

If a substantially negligible error is committed, it may be assumed that the speed v remains substantially constant for a period of time dt (of a very small amplitude and depending on the desired accuracy); on the basis of this hypothesis, after the time dt, the position x(0+dt) at the moment 0+dt will be:

$$x(0+dt)=x(0)+v(0)*dt$$

in this way the value of the position x(0+dt) at the moment 0+dt is calculated, and the operations described above are repeated until the value of the speed v(0+dt) at the moment 0+dt is determined, and so on.

The method described above has the merit of supplying accurately and quickly either the value of the position x, or the value of the speed v.

In the description given above two methods have been provided for estimating the time derivative of the flux $\varphi(t)$ (hence the value of the flux $\varphi(t)$ can be calculated), and two methods for calculating the position x(t) and the speed v(t). According to one embodiment a choice is made to use only one method for calculating the time derivative of the flux $\varphi(t)$ and one method for calculating the position x(t) and the speed v(t). According to another embodiment the choice is made to use both methods for calculating the time derivative of the flux $\varphi(t)$ and/or both the methods for calculating the position x(t) and the speed v(t), and to use an average (weighted if necessary with respect to the estimated accuracy) of the results of the two methods used, or to use one result in order to verify the other (if there is a notable inconsistency between the two results it is likely that an error in estimating will be verified).

Finally, it is useful to observe that the methods described above for estimating the position x(t) and the speed v(t) can be used only when there is a current passing through the coil 17 of an electromagnet 8. For this reason, as described above, the estimation block 15 works with both the electromagnets 8, so as to use the estimation performed with one electromagnet 8 when the other is switched off. When both the electromagnets are on, the estimation block 15 performs an average of the two values x(t) calculated with both electromagnets 8, weighted if necessary on the basis of the accuracy attributed to each value x(t) (generally the estimation of the position x made with respect to an electromagnet 8 is more accurate when the swinging arm 4 is relatively close to the pole piece 10 of said electromagnet 8.

**Claims**

1. Method for estimating the position (x) and the speed (v) of an actuator body (4) in an electromagnetic actuator (1) for controlling a valve (2) of an engine; the actuator body (4) being made at least partly of ferromagnetic material and being displaced towards at least one electromagnet (8) through the effect of the force of magnetic attraction generated by said electromagnet (8); the method being **characterised by** the fact that starting from a known value of the position (x) and a first moment (T1), a value is calculated at the first moment (T1) of the magnetic flux ($\varphi$) passing through a magnetic circuit (18) constituted by the electromagnet (8) and by the actuator body (4), the value of the speed (v) at the first moment (T1) is estimated as a function of the magnetic flux ($\varphi$) and the position (x) at the first moment (T1), and the position (x) is calculated at a second moment (T2) following the first moment (T1) and separated from said first moment (T1) by an interval of time (dt) determined by adding to the value of the position (x) at the first moment (T1) the product of the speed (v) at the first moment (T1) and the interval of time (dt).

2. Method according to Claim 1, in which said electromagnet (8) defines, together with said actuator body (4), a magnetic circuit (18) influenced by a magnetic flux ($\varphi$) produced by a coil (17) through which an electric current (i) passes; said magnetic circuit (18) having a total reluctance (R), which is assumed to be composed of the sum of a first reluctance ($R_0$) arising from an air gap (19) in the magnetic circuit (18) and a second reluctance ($R_{fe}$) arising from the part of the magnetic circuit (18) made of ferromagnetic material (4, 16); the first reluctance ($R_0$) depending on the structural properties of the magnetic circuit (18) and on the value of the position (x), while the second reluctance ($R_{fe}$) depending on the structural properties of the magnetic circuit (18) and on the value of the magnetic flux ($\varphi$) passing through the magnetic circuit (18).

3. Method according to Claim 2, in which the value for said first reluctance ($R_0$) and the value for said position (x) are connected by the following equation:

$$R_0(x(t)) = K_1[1 - e^{-k_2 \cdot x(t)} + k_3 \cdot x(t)] + K_0$$

in which $R_0$ is said first reluctance ($R_0$), x(t) is said position (x) and $K_0$, $K_1$, $K_2$, $K_3$ are four constants.

4. Method according to Claims 2 or 3, in which the relationship between the speed (v), the magnetic flux ($\varphi$) and the position (x) is supplied by the following equation:

$$\frac{di(t)}{dt} = \frac{\partial R_0(x(t))}{\partial x} \cdot \frac{dx(t)}{dt} \cdot \varphi(t) + R_0(x(t)) \cdot \frac{d\varphi(t)}{dt} + \frac{\partial H_{fe}(\varphi(t))}{\partial \varphi} \cdot \frac{d\varphi(t)}{dt}$$

$$\frac{dx(t)}{dt} = \frac{\frac{di(t)}{dt} - R_0(x(t)) \cdot \frac{d\varphi(t)}{dt} - \frac{\partial H_{fe}(\varphi(t))}{\partial \varphi} \cdot \frac{d\varphi(t)}{dt}}{\frac{\partial R_0(x(t))}{\partial x} \cdot \varphi(t)}$$

in which i is the electric current (i) circulating within the coil (17), $R_0$ is said first reluctance ($R_0$), x is the position (x) of the actuator body (4), $\varphi$ is the magnetic flux ($\varphi$) and $H_{fe}$ is the quantity of ampere-turns acted on by the iron part (4, 16) of the magnetic circuit (18).

**5.** Method according to one of the preceding claims, in which the value of the magnetic flux ($\varphi$) is estimated by measuring the value assumed from some electric parameters (i, v; va) of an electric circuit (17; 22) coupled to the magnetic circuit (18), calculating the time derivative of the magnetic flux ($\varphi$) as a linear combination of the values of the electrical parameters (i, v; va), and integrating in time the derivative of the magnetic flux ($\varphi$).

**6.** Method according to Claim 5, in which the current (i) circulating through a coil (17) of the electromagnet (8) and the voltage (v) applied to the terminals of said coil (17) are measured; the time derivative of the magnetic flux ($\varphi$) and the magnetic flux ($\varphi$) itself being calculated by applying the following formulae:

$$\frac{d\varphi(t)}{dt} = v(t) - RES \cdot i(t)$$

$$\varphi(T) = \int_0^T (v(t) - RES \cdot i(t))dt + \varphi(0)$$

in which $\varphi$ is the magnetic flux ($\varphi$), v is the voltage (v) applied to the terminals of the coil (17), RES is the resistance of the coil (17) and i is the current (i) circulating through the coil (17).

**7.** Method according to Claim 6, in which the voltage ($v_{aux}$) at the terminals of an auxiliary turn (22) coupled to the magnetic circuit (18) and concatenating the magnetic flux ($\varphi$) is measured; the auxiliary turn (22) being substantially open electrically; and the time derivative of the magnetic flux ($\varphi$) and the magnetic flux ($\varphi$) itself being calculated by applying the following formulae:

$$\frac{d\varphi(t)}{dt} = v_{aus}(t)$$

$$\varphi(T) = \int_0^T v_{aus}(t)dt + \varphi(0)$$

in which $\varphi$ is the magnetic flux ($\varphi$) and $v_{aux}$ is the voltage ($v_{aux}$) present at the terminals of the auxiliary turn (22).

**Patentansprüche**

**1.** Verfahren zum Abschätzen der Position (x) und der Geschwindigkeit (v) eines Aktuator-Körpers (4) in einem elektromagnetischen Aktuator (1) zum Steuern eines Ventils (2) eines Motors; wobei der Aktuator-Körper (4) mindestens teilweise aus ferromagnetischem Material hergestellt ist und durch die Wirkung der durch einen Elektromagneten (8) erzeugten magnetischen Anziehungskraft in Richtung auf den mindestens einen Elektromagneten (8) verschoben wird, wobei das Verfahren **dadurch gekennzeichnet ist, dass** ausgehend von einem bekannten Wert der Position (x) und einem ersten Zeitpunkt (T1) ein Wert bei dem ersten Zeitpunkt (T1) des durch einen durch den Elektromagneten (8) und durch den Aktuator-Körper (4) gebildeten magnetischen Kreis (18) fließenden magnetischen Flusses ($\varphi$) berechnet wird, der Wert der Geschwindigkeit (v) bei dem ersten Zeitpunkt (T1) als eine Funktion des magnetischen Flusses ($\varphi$) und der Position (x) bei dem ersten Zeitpunkt (T1) abgeschätzt wird, und die Position (x) bei einem zweiten Zeitpunkt (T2) berechnet wird, der dem ersten Zeitpunkt (T1) folgt und von dem ersten Zeitpunkt (T1) durch ein Zeitintervall (dt) getrennt ist, was durch Hinzufügen zu dem Wert der Position (x) bei dem ersten Zeitpunkt (T1) des Produkts der Geschwindigkeit (v) bei dem ersten Zeitpunkt (T1) und des Zeitintervalls (dt) bestimmt wird.

**2.** Verfahren nach Anspruch 1, wobei der Elektromagnet (8) zusammen mit dem Aktuator-Körper (4) einen magnetischen Kreis (18) bildet, der durch einen magnetischen Fluss ($\varphi$) beeinflusst wird, der durch eine Spule (17) erzeugt wird, durch welche ein elektrischer Strom (i) fließt; wobei der magnetische Kreis (18) eine Gesamt-Reluktanz (R) aufweist, bei welcher angenommen wird, dass sie besteht aus der Summe einer ersten Reluktanz ($R_0$), die von

einem Luftspalt (19) in dem magnetischen Kreis (18) ansteigt, und einer zweiten Reluktanz ($R_{fe}$), die von dem Teil des aus ferromagnetischem Material (4, 16) gebildeten magnetischen Kreises (18) hevorgeht; wobei die erste Reluktanz ($R_0$) von den baulichen Merkmalen des magnetischen Kreises (18) und von dem Wert der Position (x) abhängig ist, während die zweite Reluktanz ($R_{fe}$) von den baulichen Merkmalen des magnetischen Kreises (18) und von dem Wert des durch den magnetischen Kreis (18) fließend magnetischen Flusses ($\varphi$) abhängig ist.

3.  Verfahren nach Anspruch 2, wobei der Wert für die erste Reluktanz ($R_0$) und der Wert für die Position (x) durch die folgende Gleichung verbunden sind:

$$R_0(x(t)) = K_1[1-e^{-k_2 \cdot x(t)} + k_3 \cdot x(t)]+K_0$$

in welcher $R_0$ die erste Reluktanz ($R_0$) ist, x(t) die Position (x) ist und $K_0$, $K_1$, $K_2$, $K_3$ vier Konstanten sind.

4.  Verfahren nach den Ansprüchen 2 oder 3, wobei die Beziehung zwischen der Geschwindigkeit (v), dem magnetischen Fluss ($\varphi$) und der Position (x) durch die folgende Gleichung geliefert wird:

$$\frac{di(t)}{dt} = \frac{\partial R_0(x(t))}{\partial x} \cdot \frac{dx(t)}{dt} \cdot \varphi(t) + R_0(x(t)) \cdot \frac{d\varphi(t)}{dt} + \frac{\partial H_{fe}(\varphi(t))}{\partial \varphi} \cdot \frac{d\varphi(t)}{dt}$$

$$\frac{dx(t)}{dt} = \frac{\frac{di(t)}{dt} - R_0(x(t)) \cdot \frac{d\varphi(t)}{dt} - \frac{\partial H_{fe}(\varphi(t))}{\partial \varphi} \cdot \frac{d\varphi(t)}{dt}}{\frac{\partial R_0(x(t))}{\partial x} \cdot \varphi(t)}$$

in welcher i der in der Spule (17) fließende elektrische Strom (i) ist, $R_0$ die erste Reluktanz ($R_0$) ist, x die Position (x) des Aktuator-Körpers (4) ist, $\varphi$ der magnetische Fluss ($\varphi$) ist und $H_{fe}$ die Anzahl der Amperewindungen ist, auf die durch das Eisenteil (4, 16) des magnetischen Kreises (18) eingewirkt wird.

5.  Verfahren nach einem der vorherigen Ansprüche, wobei der Wert des magnetischen Flusses ($\varphi$) abgeschätzt wird durch Messen des von einigen elektrischen Parametern (i, v; va) eines mit dem magnetischen Kreis (18) verbundenen elektrischen Kreises (17; 22) angenommenen Wertes, Berechnen der Ableitung nach der Zeit des magnetischen Flusses ($\varphi$) als eine lineare Verknüpfung der Werte der elektrischen Parameter (i, v; va), und Integrieren über der Zeit der Ableitung des magnetischen Flusses ($\varphi$).

6.  Verfahren nach Anspruch 5, wobei der durch eine Spule (17) des Elektromagneten (8) fließende Strom (i) und die an den Anschlüssen der Spule (17) angelegte Spannung (v) gemessen werden; wobei die Ableitung nach der Zeit des magnetischen Flusses ($\varphi$) und der magnetische Fluss ($\varphi$) selbst durch Anwenden der folgenden Formeln berechnet werden:

$$\frac{d\varphi(t)}{dt} = v(t) - RES \cdot i(t)$$

$$\varphi(T) = \int_0^T (v(t) - RES \bullet i(t))dt + \varphi(0)$$

in welcher $\varphi$ der magnetische Fluss ($\varphi$) ist, v die an den Anschlüssen der Spule (17) angelegte Spannung (v) ist, RES der Widerstand der Spule (17) ist und i der durch die Spule (17) fließende Strom (i) ist.

7.  Verfahren nach Anspruch 6, wobei die Spannung ($v_{aux}$) gemessen wird an den Anschlüssen einer Hilfs-Windung (22), die mit dem magnetischen Kreis (18) verbunden ist und den magnetischen Fluss ($\varphi$) verbindet; wobei die Hilfs-Windung (22) im Wesentlichen elektrisch offen ist; und die Ableitung nach der Zeit des magnetischen Flusses ($\varphi$) und der magnetische Fluss ($\varphi$) selbst durch Anwenden der folgenden Formeln berechnet werden:

$$\frac{d\varphi(t)}{dt} = v_{aus}(t)$$

$$\varphi(T) = \int_0^T v_{aus}(t)dt + \varphi(0)$$

in welcher φ der magnetische Fluss (φ) ist und $v_{aux}$ die Spannung ($v_{aux}$) ist, die an den Anschlüssen der Hilfs-Windung (22) vorliegt.

**Revendications**

1. Procédé pour estimer la position (x) et la vitesse (v) d'un corps d'actionneur (4) dans un actionneur électromagnétique (1) pour commander une soupape (2) d'un moteur ; le corps d'actionneur (4) étant réalisé au moins en partie en un matériau ferromagnétique et étant déplacé vers au moins un électroaimant (8) par l'effet de la force d'attraction magnétique générée par ledit électroaimant (8) ; le procédé étant **caractérisé par le fait qu'**en partant d'une valeur connue de la position (x) et d'un premier moment (T1), une valeur est calculée au premier moment (T1) du flux magnétique (φ) passant à travers un circuit magnétique (18) constitué par l'électroaimant (8) et par le corps d'actionneur (4), la valeur de la vitesse (v) au premier moment (T1) est estimée en fonction du flux magnétique (φ) et de la position (x) au premier moment (T1), et la position (x) est calculée à un deuxième moment (T2) suivant le premier moment (T1) et séparé dudit premier moment (T1) d'un intervalle de temps (dt) déterminé en ajoutant à la valeur de la position (x) au premier moment (T1) le produit de la vitesse (v) au premier moment (T1) et de l'intervalle de temps (dt).

2. Procédé selon la revendication 1, dans lequel ledit électroaimant (8) définit, avec ledit corps d'actionneur (4), un circuit magnétique (18) influencé par un flux magnétique (φ) produit par une bobine (17) à travers laquelle un courant électrique (i) passe ; ledit circuit magnétique (18) ayant une réluctance totale (R), qui est supposée être composée de la somme d'une première réluctance ($R_0$) provenant d'un entrefer (19) dans le circuit magnétique (18) et d'une deuxième réluctance ($R_{fe}$) provenant de la partie du circuit magnétique (18) réalisée en matériau ferromagnétique (4, 16) ; la première réluctance ($R_0$) étant fonction des propriétés structurelles du circuit magnétique (18) et de la valeur de la position (x), tandis que la deuxième réluctance ($R_{fe}$) est fonction des propriétés structurelles du circuit magnétique (18) et de la valeur du flux magnétique (φ) passant à travers le circuit magnétique (18).

3. Procédé selon la revendication 2, dans lequel la valeur de ladite première réluctance ($R_0$) et la valeur de ladite position (x) sont liées par l'équation suivante :

$$R_0(x(t)) = K_1[1-e^{-k_2 \cdot x(t)} + k_3 \cdot x(t)] + K_0$$

dans laquelle $R_0$ est ladite première réluctance ($R_0$), x(t) est ladite position (x) et $K_0$, $K_1$, $K_2$, $K_3$ sont quatre constantes.

4. Procédé selon la revendication 2 ou 3, dans lequel la relation entre la vitesse (v), le flux magnétique (φ) et la position (x) est fournie par l'équation suivante :

$$\frac{di(t)}{dt} = \frac{\partial R_0(x(t))}{\partial x} \cdot \frac{dx(t)}{dt} \cdot \varphi(t) + R_0(x(t)) \cdot \frac{d\varphi(t)}{dt} + \frac{\partial H_{fe}(\varphi(t))}{\partial \varphi} \cdot \frac{d\varphi(t)}{dt}$$

$$\frac{dx(t)}{dt} = \frac{\frac{di(t)}{dt} - R_0(x(t)) \cdot \frac{d\varphi(t)}{dt} - \frac{\partial H_{fe}(\varphi(t))}{\partial \varphi} \cdot \frac{d\varphi(t)}{dt}}{\frac{\partial R_0(x(t))}{\partial x} \cdot \varphi(t)}$$

dans laquelle i est le courant électrique (i) circulant dans la bobine (17), $R_0$ est ladite première réluctance ($R_0$), x est la position (x) du corps d'actionneur (4), φ est le flux magnétique (φ) et $H_{fe}$ est la quantité d'ampères-tours corrigée par la partie en fer (4, 16) du circuit magnétique (18).

**5.** Procédé selon l'une des revendications précédentes, dans lequel la valeur du flux magnétique (φ) est estimée en mesurant la valeur supposée à partir de certains paramètres électriques (i, v ; va) d'un circuit électrique (17 ; 22) couplé au circuit magnétique (18), en calculant la dérivée par rapport au temps du flux magnétique (φ) en tant que combinaison linéaire des valeurs des paramètres électriques (i, v ; va) et en intégrant dans le temps la dérivée du flux magnétique (φ).

**6.** Procédé selon la revendication 5, dans lequel le courant (i) circulant à travers une bobine (17) de l'électroaimant (8) et la tension (v) appliquée aux bornes de ladite bobine (17) sont mesurés ; la dérivée par rapport au temps du flux magnétique (φ) et le flux magnétique (φ) lui-même étant calculés en appliquant les formules suivantes :

$$\frac{d\varphi(t)}{dt} = v(t) - RES \cdot i(t)$$

$$\varphi(T) = \int_0^T (v(t) - RES \cdot i(t))\, dt + \varphi(0)$$

dans lesquelles φ est le flux magnétique (φ), v est la tension (v) appliquée aux bornes de la bobine (17), RES est la résistance de la bobine (17) et i est le courant (i) circulant à travers la bobine (17).

**7.** Procédé selon la revendication 6, dans lequel la tension ($v_{aux}$) aux bornes d'un enroulement auxiliaire (22) couplé au circuit magnétique (18) et concaténant le flux magnétique (φ) est mesurée ; l'enroulement auxiliaire (22) est sensiblement ouvert électriquement ; et la dérivée par rapport au temps du flux magnétique (φ) et le flux magnétique (φ) lui-même sont calculés en appliquant les formules suivantes :

$$\frac{d\varphi(t)}{dt} = v_{aus}(t)$$

$$\varphi(T) = \int_0^T v_{aux}(t)\, dt + \varphi(0)$$

dans lesquelles φ est le flux magnétique (φ), $v_{aux}$ est la tension ($v_{aux}$) appliquée aux bornes de l'enroulement auxiliaire (22).

Fig.1

Fig.2

Fig.4

Fig.3

Fig.5